# EUROPÄISCHE PATENTSCHRIFT

(11) **EP 2 246 761 B1**
(45) Veröffentlichungstag und Bekanntmachung des Hinweises auf die Patenterteilung: **29.08.2012**
(21) Anmeldenummer: 09006006.2
(22) Anmeldetag: 30.04.2009
(51) Int. Cl.: G05B 19/418, G05B 19/042, G06F 11/10, H04L 1/00

(54) **Verfahren zum sicheren Ändern von Parametern einer fehlersicheren industriellen Automatisierungskomponente**
Method for error-proof modifying parameters of a failsafe industrial automation component
Procédé de modifications assurées des paramètres d'un composant d'automatisation industriel protégé contre les erreurs

(43) Veröffentlichungstag der Anmeldung: 03.11.2010
(73) Patentinhaber: SIEMENS AKTIENGESELLSCHAFT, 80333 München (DE)
(72) Erfinder: Taschke, Ulrich, 90475 Nürnberg (DE); Witte, Karl-Hermann, 90482 Nürnberg (DE)

(56) Entgegenhaltungen:
- EP-A- 1 662 346
- EP-A- 1 857 897
- WO-A-2006/053668
- DE-A1- 10 029 141

## Beschreibung

Die Erfindung betrifft ein Verfahren zum Zugriff auf zumindest einen einer Vielzahl Parameter einer fehlersicheren industriellen Automatisierungskomponente gemäß dem Oberbegriff des Patentanspruchs 1.

Bei industriellen Automatisierungskomponenten, die häufig auch als "CPU", "Controller" o.ä. bezeichnet werden, wird zwischen herkömmlichen und sog. fehlersicheren Automatisierungskomponenten unterschieden. Letztgenannte werden kurz auch als "F-CPU's" bezeichnet. Fehlersichere Automatisierungskomponenten kommen überall dort zum Einsatz, wo bei einem Ausfall oder bei einer Fehlfunktion eine Gefahr für Menschen oder die Umwelt besteht oder ein hoher materieller Schaden droht. Solche fehlersicheren Systeme und Steuerungen basieren regelmäßig auf einer Hardware-Architektur, bei der die wichtigsten Komponenten redundant (doppelt) ausgeführt sind. Weiterhin muss bei solchen Komponenten auch hinsichtlich der Software sichergestellt sein, dass diese den gestellten Sicherheitsanforderungen entspricht. Insbesondere in technischen Gebieten, in denen die Sicherheit von Menschen betroffen sein kann (beispielsweise bei Aufzügen, Kränen, Chemieanlagen und dgl.) muss nicht nur die Hardware, sondern auch die Software zertifiziert werden, d.h., dass eine unabhängige Prüfungs-Institution (beispielsweise der TÜV - technischer Überwachungsverein) die Struktur der zu verwendenden Software untersucht und dabei feststellt, ob diese den Sicherheitsanforderungen entspricht. Dies hat zur Folge, dass bei einer nachträglichen Änderung der Software eine erneute Zertifizierung notwendig ist.

In den fehlersicheren industriellen Automatisierungskomponenten werden regelmäßig eine Vielzahl von Parametern mit zugeordneten Werten ("Daten") vorgehalten, die durch andere Automatisierungskomponenten, insbesondere Bediengeräte, im laufenden Betrieb geändert werden müssen. Diese Bediengeräte, die häufig selbst keine fehlersicheren Komponenten sind, kommunizieren dazu mit den fehlersicheren Automatisierungskomponenten. Dabei können sowohl in den "nicht-fehlersicheren" Bediengerät als auch auf der Kommunikationsstrecke zwischen dem Bediengerät und der fehlersicheren Automatisierungskomponente Fehler auftreten, die die zu übertragenden Daten, also die die Informationen, die zu einer Änderung der Werte der Parameter in der industriellen Automatisierungskomponente führen, derart beeinflussen, dass sich fehlerhafte Werte für die Parameter der fehlersicheren Automatisierungskomponente ergeben.
Aus der Druckschrift EP 1 662 346 A2 - Härle et al. "Verfahren zur sicheren Parametrierung eines Feldgerätes der Automatisierungstechnik" ist ein Verfahren bekannt, bei zu ändernden Parametern für jeden zu ändernden Parameter seitens eines Bediengerätes und seitens eines Feldgerätes jeweils ein Prüfwert bestimmt wird, wobei ein Vergleich der beiden Prüfwerte über die Akzeptanz der jeweiligen Änderung entscheidet.

Die Veröffentlichung EP 1 857 897 A1 - Kock et al. "Verfahren und System zur Erstellung oder Änderung sicherheitsrelevanter Daten für eine Steuerungseinrichtung" beschreibt eine beidseitige Bildung und den Vergleich von Prüfsummen über alle zu ändernden Parameter und Daten, wobei zusätzlich noch eine Verschlüsselung der zu ändernden Daten oder Parameter vorgeschlagen wird.

Die Offenlegungsschrift DE 100 29 141 A1 - Schilling et al. "Verfahren zur Fehlerüberwachung eines Speicherinhalts mittels Prüfsummen sowie Mikrocontroller mit einem prüfsummengesicherten Speicherbereich" schlägt vor, zusätzlich zu einem vollständigen neuen Parameter-Satz für einen Speicherbereich ein Differenzdatensatz zwischen bestehenden und neuen Parametcrn bei einer Datenübertragung zu übermitteln. Eine Differenz zwischen einer jeweiligen gesamten Prüfsumme über den alten und den neuen Inhalt des Speicherbereichs wird mit einer über den Differenzdatensatz gebildeten Differenzprüfsumme verglichen, so dass eine Absicherung allein seitens des Gerätes mit dem zu ändernden Speicherbereich erfolgen kann.

Es ist eine Aufgabe der vorliegenden Erfindung, ein Verfahren für eine fehlersichere industrielle Automatisierungskomponente anzugeben, die zum Einen einen sicheren Empfang der zu ändernden Werte für die Parameter der industriellen Automatisierungskomponente gewährleistet, und zum Anderen derart aufgebaut ist, dass bei einer Änderung von Datenstrukturen in der industriellen Automatisierungskomponente eine Änderung der Software möglichst vermieden wird, so dass eine erneute Zertifizierung der Software dann nicht notwendig ist.

Die Aufgabe wird durch ein Verfahren gemäß dem Patentanspruch 1 gelöst.

Es ist dabei ein Kerngedanke der vorliegenden Erfindung, dass für die Absicherung der Wert-Änderungen sowohl seitens des Bediengerätes als auch seitens der fehlersicheren industriellen Automatisierungskomponente jeweils ein Prüfwert (Prüfsumme, CRC) gebildet wird, wobei diese Prüfwerte miteinander verglichen werden und nur bei einem positiven Vergleich die Änderung der Werte tatsächlich umgesetzt wird. Dazu soll erfindungsgemäß nicht der neue Wert des Parameters oder der Parameter für die Bildung des Prüfwertes herangezogen werden, sondern die Differenz zum bisherigen Wert des Parameters. Dies hat erfindungsgemäß zur Folge, dass nicht-geänderte Werte und also nicht-betroffene Parameter keinen Beitrag zur Bildung des Prüfwertes liefern, sich also "neutral" einbringen.

Die Lösung der Aufgabe sieht insbesondere eine Schnittstelle zum Zugriff auf zumindest einen einer Vielzahl Parameter einer fehlersicheren industriellen Automatisierungskomponente vor, wobei die fehlersichere Automatisierungskomponente mit zumindest einem zugeordneten Bediengerät für den Zugriff auf die Schnittstelle verbunden ist. Dabei ist die Schnittstelle zur Erzeugung eines ersten Prüfwertes nach einem Zugriff des Bediengerätes auf den zumindest einen Parameter eingerichtet, wobei vorgesehen ist, dass derjenige oder diejenigen der Vielzahl Parameter, dessen oder deren Wert durch den Zugriff geändert werden soll, einen Beitrag zum ersten Prüfwert beiträgt, und wobei vorgesehen ist, dass derjenige oder diejenigen der Vielzahl Parameter, deren Wert durch den Zugriff nicht geändert werden soll, keinen Beitrag zum ersten Prüfwert beitragen, und wobei der Unterschied des Wertes des Parameters zwischen dem bisherigen Wert und dem durch den Zugriff zu ändernden Wert in die Berechnung des ersten Prüfwertes eingeht. Weiter ist der Schnittstelle eine Vergleichsinstanz zum Vergleich des ersten Prüfwertes mit einem analog dazu seitens des Bediengerätes gebildeten zweiten Prüfwertes zugeordnet, wobei die Schnittstelle derart ausgebildet ist, dass der geänderte Wert des zumindest einen Parameters in den Fällen in der industriellen Automatisierungskomponente angewendet wird, in denen der erste und der zweite Prüfwert übereinstimmen. Durch dieses standardisierte Verfahren und durch die damit mögliche Modularisierung wird die Zertifizierung neuer Bedienfunktionen erleichtert. Dabei ermöglicht die Schnittstelle die erleichterte Projektierung von Bedienfunktionen für die Bedienung von Strukturen, Massendaten und einzelnen Werten, weil jeder Parameter in eine Vielzahl von Bedienfunktionen eingebunden werden kann. Jedes bedienbare Element, also z.B. bedienbare Parameter, kann also mehreren Bedienfunktionen und mehreren Bediengeräten zugeordnet werden. Dies ermöglicht die unabhängige Projektierung und Programmierung unterschiedlicher Sichten auf die bedienbaren Elemente und Parameter. Eine Änderung der Software ("F-Programm") in der fehlersicheren Automatisierungskomponente erfordert nur für die unmittelbar betroffenen Bedienfunktionen Anpassungen im Bediengerät bzw. im bedienten System, welches aus dem Programm der fehlersicheren Automatisierungskomponente und den Bediengeräten besteht.

Die Lösung der Aufgabe sieht weiterhin ein Verfahren für eine Schnittstelle zum Zugriff auf zumindest einen aus einer Vielzahl Parameter einer fehlersicheren industriellen Automatisierungskomponente vor, wobei auf die Schnittstelle durch zumindest ein der industriellen Automatisierungskomponente zugeordnetes Bediengerät zugegriffen wird, wobei zur Änderung zumindest eines der Vielzahl Parameter in einem ersten Schritt ein geänderter Wert für diesen Parameter oder ein Differenzwert zum bisherigen Wert dieses Parameters von dem Bediengerät zur fehlersicheren industriellen Automatisierungskomponente gesendet wird, in einem zweiten Schritt in der industriellen Automatisierungskomponente nach einer vorgegebenen Rechenvorschrift ein erster Prüfwert anhand der Differenz zwischen dem bisherigen und dem geänderten Wert des Parameters errechnet und gespeichert wird, in einem dritten Schritt in dem Bediengerät anhand derselben vorgegebenen Rechenvorschrift ein zweiter Prüfwert anhand der Differenz zwischen dem bisherigen und dem geänderten Wert des zumindest einen Parameters errechnet und an die Schnittstelle der industriellen Automatisierungskomponente übertragen wird, und in einem vierten Schritt in der industriellen Automatisierungskomponente der erste und der zweite Prüfwert miteinander verglichen werden, wobei im positiven Fall des Vergleichs der Differenzwert oder der geänderte Wert des Parameters in der Automatisierungskomponente angewendet wird. Durch dieses Verfahren können die Vorteile, die im Zusammenhang mit der Schnittstelle diskutiert wurden, realisiert werden.

Erfindungsgemäß ist die Vielzahl der Parameter in einer Liste mit einer jeweils für jeden Parameter feststehenden Position organisiert, wobei ein Bezeichner, Positionsnummer, Zähler, Pointer oder dgl. für die jeweilige Position des jeweils zu ändernden zumindest einen Parameters oder die Reihenfolge der Wertänderungen in die Berechnung des ersten und des zweiten Prüfwertes eingeht. Dies gilt insbesondere für die Fälle, in denen nur die Daten, also alle Werte aller Parameter, übermittelt werden, ohne die Namen der Parameter explizit mit anzugeben. Damit erfolgt die Identifikationsabsicherung über die Position.

Vorteilhafte Ausgestaltungen des erfindungsgemäßen Verfahrens sind in dem abhängigen Patentanspruch 2 angegeben.

Für die Erstellung von F-Programmen ist es vorteilhaft, wenn die Schnittstelle für Parameter unterschiedlicher Datentypen eingerichtet ist, wobei für die Schnittstelle für jeden der Datentypen jeweils einen Funktionsblock zur Berechnung des ersten Prüfwertes vorsieht. So muss bei der Hinzufügung oder Änderung von Datentypen nur ein neuer bzw. geänderter Funktionsblock für den betroffenen Datentyp bereitgestellt werden, ohne dass andere Funktionsblöcke bzw. Softwareblöcke betroffen wären. Mehrere Datentypen können auf unterschiedliche Art repräsentiert werden, z.B. indem für jeden Typ eine separate Liste vorgesehen wird, oder indem eine Liste mit einem Basistyp vorgesehen wird, aus dem der endgültige Datentyp zusammengesetzt wird (z. B. 4 Byteparameter bilden einen Real-Parameter), oder indem eine Liste mit einem Datentyp vorgesehcn wird, auf den alle anderen abgebildet werden (z.B. wird BOOL durch 2 Konstanten dargestellt). Auch Mischformen sind möglich.

Eine rationelle Vorgehensweise, bei der Rechenleistung eingespart werden kann, ergibt sich im Fall mehrerer zu ändernder Parameter, wenn in der industriellen Automatisierungskomponente der erste Prüfwert anhand aller in diesen Bedienschritt zu ändernden Parameter und in dem Bediengerät ein gemeinsamer zweiter Prüfwert anhand aller in diesem Bedienschritt zu ändernden Parameter gebildet wird. Alternativ kann auch jeweils ein Prüfwert über alle Parameter errechnet werden.

Ausführungsbeispiele des erfindungsgemäßen Verfahrens werden nachfolgend anhand der Zeichnung erläutert.

Dabei zeigt die einzige Figur in schematischer Darstellung eine fehlersichere industrielle Automatisierungskomponente mit der erfindungsgemäßen Schnittstelle, und ein zugeordnetes Bediengerät.

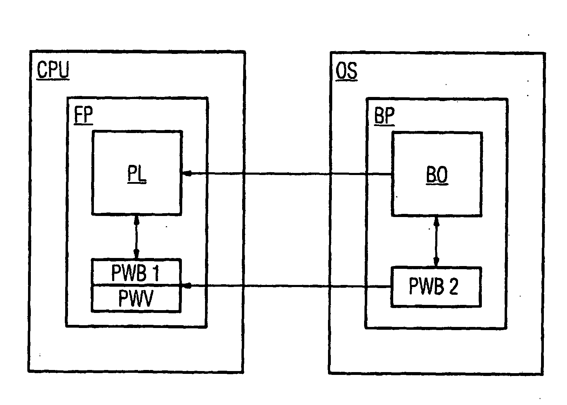

In der Figur 1 ist eine fehlersichere industrielle Automatisierungskomponente CPU schematisch dargestellt, welche über eine nicht dargestellte und nicht notwendigerweise sicherheitsgerichtete Kommunikationsverbindung, beispielsweise ein PROFINET- bzw. ein Industrial-Ethernet-Netzwerk, mit einem ebenfalls schematisch dargestellten Bediengerät OS ("Operation Station") verbunden ist. Die fehlersichere Automatisierungskomponente CPU ist mit einer Software FP ("Failsafe-Program") geladen, welches neben einer Anzahl hier nicht diskutierter Funktionsblöcke eine Parameter-Liste PL mit Parametern und zugeordneten Werten umfasst und mit einem Funktionsblock PWB1 ("Prüfwert-Berechnung") ausgestattet ist. Bei der Verwendung von Parametern mehrerer Datentypen ist in diesem Ausführungsbeispiel für jeden der Datentypen ein eigener Funktionsblock zur Prüfwertberechnung vorgesehen; aus Gründen der Übersichtlichkeit reduziert sich das hier diskutierte Ausführungsbeispiel jedoch auf einen einzigen Datentypen. Schließlich ist die Software FP mit einem weiteren Funktionsblock, die Vergleichsinstanz PWV ("Prüfwert-Vergleich"), ausgerüstet.

Das Bediengerät OS ist mit einem Bedienprogramm BP ausgerüstet, welches eine Benutzeroberfläche BO zur Eingabe von Werten bzw. zur Änderung von Werten für Parameter der Automatisierungskomponente CPU und zur Übertragung dieser geänderten Werte bzw. Parameter an die Software FP ausgerüstet ist. Weiter umfasst das Bediengerät OS einen Software-Block PWB2 zur Berechnung der Prüfwerte von geänderten Parametern. Dieser Software-Block PWB2 errechnet Prüfwerte nach demselben Algorithmus wie der Funktionsblock PWB1 der Automatisierungskomponente. Auch hier sind in der Realität für jeden zu betrachtenden Datentyp separate Routinen zur Berechnung des jeweiligen Prüfwertes vorgesehen, wobei sich dieses Ausführungsbeispiel, wie erwähnt, aus Gründen der Übersichtlichkeit auf einen einzigen Datentypen und damit nur einen Software-Block PWB2 bezieht.

Für die Berechnung der Prüfwerte für zu ändernde Parameter wird, wie bereits erwähnt, der Unterschied zwischen dem bisherigen Wert und dem neuen Wert des jeweiligen Parameters für die Bildung des Prüfwertes herangezogen. Aus diesem Grund wird im vorliegenden Ausführungsbeispiel in einem ersten Schritt zumindest der Teil der Parameter mit den zugehörigen Werten von dem Bedien-Programm BP aus der Parameter-Liste PL der Automatisierungskomponente CPU abgerufen, der (möglicherweise) geändert werden soll. In einer Variante kann der komplette Datenbestand der Parameter-Liste PL in einem Speicherbereich des Bedien-Programms BP "gespiegelt" werden. In einer alternativen Ausführungsform, oder auch von Fall-zu-Fall wechselnd, können durch das Bedienprogramm BP bzw. durch die Benutzeroberfläche BO lediglich Wert-Änderungen (sog. "Delta-Werte") an die Automatisierungskomponente CPU übermittelt werden, beispielsweise derart, dass ein Steuerungsparameter X um einen Wert Y erhöht werden soll, oder ähnlich. In einem solchen Fall kann das vorherige Abrufen der bisherigen Werte der betroffenen Parameter auch unterbleiben.

In beiden Fällen liegt nach der Übertragung des neuen Wertes bzw. der Wert-Änderung sowohl im Bedienprogramm BP als auch in einer Steuerungs-Routine des Failsafe-Programms der Software FP, die Information darüber vor, welcher der Parameter sich um welchen Wert verändern soll. Diese Information wird auf der Seite des Bedienprogramms BP an den Software-Block PWB2 und seitens der Software FP an den Funktionsblock PWB1 übermittelt. In beiden genannten Instanzen zur Prüfwertberechnung wird nun nach demselben Algorithmus jeweils ein Prüfwert errechnet, welcher die Änderung des Wertes bzw. der Werte repräsentiert. Dabei ist unerheblich, ob der Prüfwert nur über die geänderten Werte oder über alle Parameter mit deren Werten errechnet wird, weil nur diejenigen Parameter und deren Werte einen Beitrag zum Prüfwert erbringen, bei denen tatsächlich eine Änderung des Wertes stattgefunden hat; alle anderen Werte gehen "neutral" in die Prüfwerte ein. Der seitens des Bedienprogramms BP durch den Software-Block PWB2 errechnete Prüfwert wird an den Software-Block, die Vergleichsinstanz PWV, des Failsafe-Programms (Software FP) übertragen und dort mit dem durch den Funktionsblock PWB1 ermittelten Prüfwert verglichen. Sofern beide Prüfwerte übereinstimmen, werden die geänderten Werte bzw. die Wert-Änderungen ("Deltas") auf die Parameter-Liste PL angewendet bzw. dort übernommen.

Durch die zuvor beschriebene Vorgehensweise und durch die Funktionsblöcke PWB1, PWV der Software FP der fehlersicheren Automatisierungskomponente CPU wird eine Modularisierung erreicht, die nicht nur ein sicheres Empfangen von Werten bzw. Wert-Änderungen gestattet, sondern insbesondere die Projektierung vereinfacht, die Zertifizierung erleichtert und eine Rückwirkungsfreiheit bei Projektierungsänderungen ermöglicht. Zur wirksamen Modularisierung trägt die Trennung der Bedienung auf der nicht-sicherheitsgerichteten Recheneinheit, nämlich des Bediengerätes OS, und der sicherheitsgerichteten Recheneinheit, der "Failsafe"-Automatisierungskomponente CPU, bei. Durch die Trennung der Bedienung der Parameter-Bearbeitung von der Protokollabwicklung wird weiter die Modularisierung der Softwareentwicklung und der Projektierung erleichtert. Empfangsroutinen für komplexe Bedienänforderungen können auf der sicherheitsgerichteten Automatisierungskomponente CPU analog zu Bedienungen ohne besondere Sicherheitsanforderungen auf Standard-Automatisierungskomponenten realisiert werden.

Dadurch, dass die Wertänderung und nicht der jeweilige absolute Wert aller bedienbaren Parameter der Software FP abgesichert wird, gehen Parameter, die während einer Bedienung nicht geändert werden, neutral in den Prüfwert bzw. die beiden errechneten Prüfwerte ein.

Die Identifikation eines Parameters erfolgt vorteilhaft über dessen Position und damit beispielsweise aus der Sortierung der Parameter nach einem festgelegten Kriterium. Die Position des Parameters bestimmt die Reihenfolge, in der sich die Parameter in die Prüfwertberechnung einbringen und hat dadurch Einfluss auf die Größe des Beitrages, den die Wert-Änderung auf den Prüfwert hat. Um bei Änderungen nur diejenigen Bediengeräte OS anpassen zu müssen, die einen geänderten Parameter bearbeiten sollen, wird die Position eines Parameters vorteilhaft nicht bei nachträglichen Änderungen der Projektierung der Projektierung geändert. Dies bedeutet, dass gestrichene Parameter durch "virtuelle" Parameter ersetzt werden, die dafür sorgen, dass sich die Position der nachfolgenden, von einer Änderung nicht betroffenen Parameter nicht verschiebt, so dass sich deren Beitrag bei der Bildung von Prüfwerten nicht ändert. Die "virtuellen" Parameter, die als "Platzhalter" fungieren, gehen ebenfalls neutral in die Prüfwerte ein, weil deren "virtuelle" Werte nie geändert werden. Neue Parameter werden vorteilhaft am Ende der Parameter-Liste PL angefügt oder ersetzen virtuelle Parameter, so dass diese ebenfalls nicht zur Verschiebung der Positionen der bisherigen Parameter beitragen und somit auch nicht zur Anpassung der Routinen zur Prüfwert-Berechnung PWB2 nicht-betroffener Bediengeräte OS Anlass geben.

Die Absicherung der Änderung von Werten anstelle der absoluten (neuen) Werte ermöglicht, wie erwähnt, die flexible Projektierung von Bedienfunktionen mit standardisierten Mitteln. Dies führt dazu, dass bei Änderungen weite Teile der Software der fehlersicheren Automatisierungskomponente CPU nicht neu zertifiziert werden müssen. In gleicher Weise ermöglicht dieses Verfahren die Projektierung von Bedienfunktionen für die Bedienung von Strukturen, Massendaten und einzelnen Werten. Jedes bedienbare Element kann dabei mehreren Bedienfunktionen zugeordnet werden.

## Patentansprüche

1. Verfahren für eine Schnittstelle zum Zugriff auf zumindest einen aus einer Vielzahl von Parametern einer fehlersicheren industriellen Automatisierungskomponente (CPU), wobei auf die Schnittstelle durch zumindest ein der industriellen Automatisierungskomponente (CPU) zugeordnetes Bediengerät (OS) zugegriffen wird,
**dadurch gekennzeichnet,**
**dass** zur Änderung zumindest einer der Vielzahl von Parametern
- in einem ersten Schritt ein geänderter Wert für diesen Parameter oder ein Differenzwert zum bisherigen Wert dieses Parameters von dem Bediengerät (OS) zur fehlersicheren industriellen Automatisierungskomponente (CPU) gesendet wird,
- in einem zweiten Schritt in der industriellen Automatisierungskomponente (CPU) nach einer vorgegebenen Rechenvorschrift ein erster Prüfwert anhand der Differenz zwischen dem bisherigen und dem geänderten Wert des zumindest einen Parameters errechnet und gespeichert wird,
- in einem dritten Schritt in dem Bediengerät (OS) anhand derselben vorgegebenen Rechenvorschrift ein zweiter Prüfwert anhand der Differenz zwischen dem bisherigen und dem geänderten Wert des zumindest einen Parameters errechnet und an die Schnittstelle der industriellen Automatisierungskomponente (CPU) übertragen wird, und
- in einem vierten Schritt in der industriellen Automatisierungskomponente (CPU) der erste und der zweite Prüfwert miteinander verglichen werden, wobei im positiven Fall des Vergleichs der Differenzwert oder der geänderte Wert des Parameters in der Automatisierungskomponente (CPU) angewendet wird, wobei
die Vielzahl der Parameter in einer Liste mit einer jeweils für jeden Parameter feststehenden Position organisiert ist, wobei ein Bezeichner, eine Positionsnummer, ein Zähler, ein Pointer oder dgl. für die jeweilige Position des jeweils zu ändernden zumindest einen Parameters oder eine Reihenfolge der Wertänderungen in die Errechnung des ersten und des zweiten Prüfwertes eingeht.

2. Verfahren nach Patentanspruch 1,
**dadurch gekennzeichnet,**
**dass** in einem Bedienschritt eine Mehrzahl der Parameter geändert wird, wobei
in der industriellen Automatisierungskomponente (CPU) der erste Prüfwert anhand aller in diesem Bedienschritt zu ändernden Parameter und in dem Bediengerät (OS) ein zweiter Prüfwert anhand aller in diesem Bedienschritt zu ändernden Parameter gebildet wird.

## Claims

1. Method for an interface for accessing at least one from a multiplicity of parameters for a failsafe industrial automation component (CPU), wherein the interface is accessed by at least one operator panel (OS) associated with the industrial automation component (CPU),
**characterized**
**in that** at least one of the multiplicity of parameters is changed by virtue of
- a first step involving an amended value for this parameter or a difference value in relation to the previous value of this parameter being sent from the operator panel (OS) to the failsafe industrial automation component (CPU),
- a second step involving the industrial automation component (CPU) using a prescribed computation code to calculate a first test value from the difference between the previous and amended values of the at least one parameter, and storing said test value,
- a third step involving the operator panel (OS) using the same prescribed computation code to calculate a second test value from the difference between the previous and amended values of the at least one parameter, and transmitting said test value to the interface of the industrial automation component (CPU), and
- a fourth step involving the industrial automation component (CPU) comparing the first and second test values with one another, wherein if the comparison is positive then the difference value or the amended value of the parameter is applied in the automation component (CPU), wherein
the multiplicity of parameters are organized in a list using a position which is fixed for each respective parameter, wherein a descriptor, a position number, a counter, a pointer or the like for the respective position of the respective at least one parameter that is to be changed or an order of the value changes is used in the calculation of the first and second test values.

2. Method according to Patent Claim 1,
**characterized**
**in that** an operator step involves a plurality of the parameters being changed, wherein
the industrial automation component (CPU) forms the first test value from all the parameters that are to be changed in said operator step, and the operator panel (OS) forms a second test value from all the parameters that are to be changed in said operator step.

## Revendications

1. Procédé pour une interface d'accès à au moins l'un d'une pluralité de paramètres d'un composant ( CPU ) d'automatisation industriel protégés vis-à-vis des erreurs, dans lequel on accède à l'interface par au moins un appareil ( OS ) de commande associé au composant ( CPU ) d'automatisation industriel,
**caractérisé**
**en ce que**, pour la modification d'au moins l'un de la pluralité de paramètres,
- on envoie dans un premier stade une valeur modifiée de ce paramètre ou une valeur de différence à la valeur jusqu'ici de ce paramètre de l'appareil ( OS ) de commande au composant ( CPU ) d'automatisation industriel protégé vis-à-vis des erreurs,
- dans un deuxième stade, on calcule et on mémorise, dans le composant ( CPU ) d'automatisation industriel suivant une prescription de calcul prescrite, une première valeur de contrôle au moyen de la différence entre la valeur jusqu'ici et la valeur modifiée du au moins un paramètre,
- dans un troisième stade, on calcule, dans l'appareil ( OS ) de commande au moyen de la même prescription de calcul prescrite, une deuxième valeur de contrôle au moyen de la différence entre la valeur jusqu'ici et la valeur modifiée du au moins un paramètre et on la transmet à l'interface du composant ( CPU ) d'automatisation industriel, et
- dans un quatrième stade, on compare dans le composant ( CPU ) d'automatisation industriel la première et la deuxième valeurs de contrôle entre elles, dans lequel, si la comparaison est positive, on applique la valeur de différence ou la valeur modifiée du paramètre dans le composant ( CPU ) d'automatisation, dans lequel
on organise la pluralité des paramètres suivant une liste en ayant une position fixe respectivement pour chaque paramètre, un indicateur, un numéro de position, un compteur, un pointeur ou analogue, pour la position respective du respectivement au moins un paramètre à modifier ou d'une suite des modifications de valeur, entrant dans le calcul de la première et de la deuxième valeurs de contrôle.

2. Procédé suivant la revendication 1,
**caractérisé**
**en ce que**, dans un stade de commande, on modifie une multiplicité des paramètres, dans lequel
dans le composant ( CPU ) d'automatisation industriel, on forme la première valeur de contrôle au moyen de tous les paramètres à modifier dans ce stade de commande et, dans l'appareil ( OS ) de commande, une deuxième valeur de contrôle au moyen de tous les paramètres à modifier dans ce stade de commande.
